(19) Europäisches Patentamt
European Patent Office
Office européen des brevets

(11) **EP 1 908 793 A1**

(12) **EUROPEAN PATENT APPLICATION**
published in accordance with Art. 153(4) EPC

(43) Date of publication:
**09.04.2008 Bulletin 2008/15**

(51) Int Cl.:
*C08J 3/14* (2006.01)   *C08L 77/00* (2006.01)

(21) Application number: **05730668.0**

(22) Date of filing: **15.04.2005**

(86) International application number:
**PCT/JP2005/007347**

(87) International publication number:
**WO 2006/112028 (26.10.2006 Gazette 2006/43)**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(71) Applicant: **Ube Industries, Ltd.**
**Ube-Shi,**
**Yamaguchi 755-8633 (JP)**

(72) Inventors:
• **ASANO, Yukihiko**
**c/o Polymer Laboratory**
**Ichihara-shi**
**Chiba 290-0045 (JP)**

• **SHOJI, Tatsuya**
**c/o Polymer Laboratory**
**Ichihara-shi**
**Chiba 290-0045 (JP)**
• **YAO, Shigeru**
**c/o Polymer Laboratory**
**Ichihara-shi**
**Chiba 290-0045 (JP)**
• **ARIDOMI, Tadatoshi**
**c/o Polymer Laboratory**
**Ichihara-shi**
**Chiba 290-0045 (JP)**

(74) Representative: **Albrecht, Thomas**
**Kraus & Weisert**
**Patent- und Rechtsanwälte**
**Thomas-Wimmer-Ring 15**
**80539 München (DE)**

(54) **METHOD FOR PURIFYING POROUS POLYAMIDE FINE POWDER**

(57)   A porous polyamide fine powder having been prepared by bringing a non-solvent B for the polyamide into contact with a polyamide solution in which a polyamide is dissolved in a solvent A and containing a remaining solvent A is treated with a poor solvent C which is compatible with the solvent A at least at a temperature of 40°C or higher at a temperature of 40°C or higher, whereby the solvent A is extracted out of the porous polyamide fine powder.

**Description**

FIELD OF THE INVENTION

The present invention relates to a method for purifying a porous polyamide fine powder.

BACKGROUND OF THE INVENTION

The porous spherical polyamide particles are studied for the use as components for cosmetics such as cleansing mask or for packing material for chromatographic apparatus. Further, the porous spherical polyamide particles are studied for the use as catalyst carriers or adsorbents in food industry and medical fields.
It is known that the porous spherical polyamide particles can be produced by a solvent-inducing phase separation process. The solvent-inducing phase separation process comprises mixing a polyamide solution comprising polyamide in a solvent and a solvent that is a non-solvent (or a poor solvent) for the polyamide, to cause phase separation, whereby precipitating polyamide particles.
Examples of the solvents (good-solvents) for polyamide include phenolic compounds such as phenol, cresol and chlorophenol, formic acid, sulfuric acid, acetic acid, trichloroacetic acid, ethylene carbonate, hexamethylphosphate triamide(HMPT), trifluoroethanol, trichloroethanol, chloral hydrate, hydrogen chlorofluoride, saturated alcohol solutions containing alcohol-soluble salts (e.g., methanol containing calcium chloride or magnesium chloride), hydrogen fluoride, hydrogen chloride, liquid sulfur dioxide, and phosphoric acid.
JP-2002-80629 A describes a method for producing porous polyamide spherical particles having a number average particle size in the range of 1 to 30 $\mu$m and a BET specific surface area in the range of 100 to 80,000 m$^2$/kg, utilizing the solvent-inducing phase separation method.

DISCLOSURE OF THE INVENTION

The solvent-inducing phase separation method is advantageously employable in industry for producing a porous polyamide fine powder having a uniform particle size. According to the studies by the present inventors, however, it was found that not a small amount of a solvent which was employed in the producing procedure remains in the porous polyamide fine powder produced by the solvent-inducing phase separation method. It is further found that a phenolic solvent such as cresol or phenol, formic acid, and sulfuric acid tend to remain in the produced porous polyamide fine powder due to their high affinity to the polyamide. The solvents remaining in the porous polyamide fine powder may cause troubles to human body when the polyamide fine powder is employed as a component of cosmetics which are necessarily brought into contact with the human body.
The aforementioned JP-2002-80629 A describes that the porous polyamide spherical particles can be washed with methanol several times. However, according to studies by the present inventors, it is difficult to apparently reduce the amount of the solvent remaining in the porous polyamide particles, merely by washing with methanol at an ordinary temperature (25°C).
Accordingly, it is an object of the present invention to provide a porous polyamide fine powder of a high purity. Further, it is another object of the invention to provide a method favorably employable for removing the solvent remaining in the porous polyamide particles which are produced by the solvent-inducing phase separation method.
In one aspect, the present invention resides in a method for purifying a porous polyamide fine powder having been prepared by bringing a non-solvent B for the polyamide into contact with a polyamide solution in which a polyamide is dissolved in a solvent A and containing a remaining solvent A is treated with a poor solvent C which is compatible with the solvent A at least at a temperature of 40°C or higher at a temperature of 40°C or higher, whereby the solvent A is extracted out of the porous polyamide fine powder.
In another aspect, the invention resides in a porous polyamide fine powder purified by the above-mentioned purifying method according to the invention.
In a further aspect, the invention resides in a porous polyamide fine powder which does not contain 100 weight ppm or more of any of phenol compounds, formic acid, and sulfuric acid.
The method of invention for purifying a porous polyamide fine powder can favorably utilized in industry for decreasing the solvent remaining in a porous polyamide fine powder which was produced by the solvent-inducing phase separation method.
The porous polyamide fine powder containing a less amount of the remaining polyamide-solvent which is obtained by the method of the invention for purifying a porous polyamide fine powder is favorably employable as material to be utilized in contact with human body, such as cosmetics.

PREFERRED EMBODIMENTS OF THE INVENTION

Preferred embodiments of the method of the invention for purifying a porous polyamide fine particles are described below.

(1) The solvent A is a compound selected from the group consisting of phenolic compounds, formic acid and sulfuric acid.
(2) The non-solvent B is a compound selected from the group consisting of water and organic solvents in which the polyamide is sparingly soluble.
(3) The poor solvent C is a compound selected from the group consisting of aliphatic alcohols, aliphatic or aromatic ketones, aliphatic or aromatic hydrocarbons, and water.
(4) The polyamide is polyamide 6 and the non-solvent B comprises water and an organic solvent in which the polyamide is sparingly soluble.
(5) The polyamide is polyamide 12 and the non-solvent B comprises alkylene glycol and an organic solvent other than the alkylene glycol in which the polyamide is sparingly soluble.
(6) The solvent A is a phenolic compound and the poor solvent C is an aliphatic alcohol, an aliphatic ketone, an aromatic ketone, or an aromatic hydrocarbon.
(7) The solvent A is formic acid or sulfuric acid and the poor solvent C is an aliphatic alcohol, an aliphatic ketone, or water.
(8) The porous polyamide fine powder is brought into contact with an alkaline alcohol solution in advance the powder is brought into contact with the poor solvent C.
(9) The porous polyamide fine powder has a number average particle size in the range of 1 to 30 $\mu$m and a BET specific surface area in the range of 100 to 80,000 m$^2$/kg.

The porous polyamide fine powder to be subjected to the method of the invention for purifying porous polyamide fine powder is a porous polyamide fine powder having been prepared by bringing a non-solvent B for the polyamide into contact with a polyamide solution in which a polyamide is dissolved in a solvent A.

The porous polyamide fine powder preferably comprises polyamide 6, polyamide 11, polyamide 12 or polyamide 66. The polyamide preferably has a number average molecular weight in the range of 2,000 to 100,000, more preferably in the range of 5,000 to 40,000.

Examples of the solvents A employed for the production of the porous polyamide fine particles include phenolic compounds such as phenol, cresol and chlorophenol, formic acid, sulfuric acid, acetic acid, trichloroacetic acid, ethylene carbonate, hexamethylphosphate triamide(HMPT), trifluoroethanol, trichloroethanol, chloral hydrate, hydrogen chlorofluoride, saturated alcohol solutions containing alcohol-soluble salts, hydrogen fluoride, hydrogen chloride, liquid sulfur dioxide, and phosphoric acid. The solvents A can be employed in combination.

It is preferred that the solvent A is a phenolic compound, formic acid, or sulfuric acid. More preferably, the solvent A is a phenolic compound, particularly phenol or cresol (more specifically m-cresol).

The polyamide solution can contain a freezing point depressant. The freezing point depressant can be a non-solvent for polyamide, provided that the incorporation of the non-solvent does not cause precipitation of the polyamide. Examples of the freezing point depressants include water, methanol, ethanol, 1-propanol, 2-propanol, 1-butanol, 2-butanol, 2-methyl-1-propanol, 2-methyl-2-propanol, 1-pentanol, 1-hexanol, ethylene glycol, triethylene glycol, propylene glycol, glycerol, and diglycerol.

The concentration of polyamide in the polyamide solution is preferably in the range of 0.1 to 30 wt.%, more preferably in the range of 0.2 to 25 wt.%.

Examples of the non-solvents B to be brought into contact with the polyamide solution include water and organic solvents (polyamide-non-dissolving organic solvents) in which the polyamide is sparingly soluble. Two or more of the non-solvents B can be employed in combination. It is preferred that the non-solvent B does not dissolve the polyamide in an amount of 0.01 wt.% or more.

Examples of the polyamide-non-dissolving organic solvents are alkylene glycols such as ethylene glycol and propylene glycol.

Other examples of the polyamide-non-dissolving organic solvents include monohydric alcohols and trihydric alcohols.

The monohydric alcohol preferably is a monohydric alcohol having 1 to 6 carbon atoms. The monohyrdic alcohol can be linear or branched. Examples of the monohydric alcohols include methanol, ethanol, 1-propanol, 2-propanol, 1-butanol, 2-butanol, 2-methyl-1-propanol, 2-methyl-2-propanol, 1-pentanol, and 1-hexanol.

The trihydric alcohol can be glycerol.

If the polyamide is polyamide 6, the non-solvent B preferably is a mixture of water and a polyamide-non-dissolving organic solvent (preferably a monohydric alcohol).

If the polyamide is polyamide 12, the non-solvent B preferably is a mixture of an alkylene glycol and a polyamide-non-dissolving organic solvent other than alkylene glycol, preferably a trihydric alcohol.

In the production of a porous polyamide fine powder, a polyamide solution and a non-solvent B are mixed to give a temporarily homogeneous mixture and then allowed to stand, whereby porous polyamide particles precipitate. The precipitation of the porous polyamide particles is preferably performed at a temperature in the range of 0 to 80°C, more preferably at a temperature in the range of 25 to 40°C.

A thickening agent can be incorporated into a mixture of the polyamide solution and non-solvent B so as to increase a viscosity of the mixture and keep the precipitating polyamide particles from being aggregated. An example of the thickening agent is an alkylene glycol having a number average molecular weight of 1,000 or more, particularly, in the range of 1,100 to 5,000. Examples of the polyalkylene glycols include polyethylene glycol an polypropylene glycol. The thickening agent can be incorporated into one or both of the polyamide solution and non-solvent B. Otherwise, the thickening agent can be simultaneously mixed when the polyamide solution and non-solvent B are mixed with each other. In addition, the thickening agent can be incorporated into the mixture as soon as it is formed.

The porous polyamide particle precipitate can be isolated from the mixture by a conventional procedure such as filtration, decantation, or centrifugal separation.

According to the method of the invention for purifying a porous polyamide fine powder, the porous polyamide fine powder obtained above is brought into contact with a poor solvent C which is compatible with the solvent A at least at a temperature of 40°C or higher at a temperature of 40°C or higher, whereby the solvent A is extracted out of the porous polyamide fine powder.

A most portion of the solvent A remaining in the porous polyamide fine powder is present in the amorphous phase of the polyamide. Therefore, it is possible that the solvent A remaining in the amorphous phase of the polyamide can be efficiently extracted out by bringing the porous polyamide fine powder into contact with the poor solvent C at a temperature of 40°C or higher which is close to the glass transition temperature of the polyamide. It is preferred that the polyamide fine powder is brought into contact with the poor solvent C at a temperature in the range of 50 to 140°C. -

Examples of the poor solvents C include aliphatic alcohols, aliphatic or aromatic ketones, aliphatic or aromatic hydrocarbons, and water. Two or more of the poor solvents C can be employed in combination. It is preferred that the poor solvent C does not dissolve polyamide in an amount of 0.01 wt.% or more.

Examples of the aliphatic alcohols are monohydric aliphatic alcohols having 1 to 3 carbon atoms such as methanol, ethanol, 1-propanol and 2-propanol.

Examples of the aliphatic ketones include acetone and methyl ethyl ketone.

Examples of the aromatic ketones include acetophenone, propiophenone and butyrophenone.

Examples of the aromatic hydrocarbons include toluene and xylene.

Examples of the aliphatic hydrocarbons include heptane, hexane, octane and n-decane.

In consideration of the compatibility with the solvent A, the poor solvent C preferably is a an aliphatic alcohol, an aliphatic ketone, an aromatic ketone or an aromatic hydrocarbon in the case that the solvent A is a phenol compound. On the other hand, in the case that the solvent A is formic acid or sulfuric acid, the poor solvent C preferably is an aliphatic alcohol, an aliphatic ketone or water.

The porous polyamide fine powder can be brought into contact with the poor solvent C by placing the polyamide fine powder in the poor solvent C heated to 40°C or higher. under stirring. The porous polyamide fine powder also can be brought into contact with the poor solvent C by means of a jacketed Soxhlet extractor. Otherwise, the porous polyamide fine powder can be brought into contact with the poor solvent C by rotating the polyamide fine powder at a high speed in a centrifugal separator and bringing the rotated powder into contact with the poor solvent C heated to 40°C or higher. The porous polyamide fine powder can generally be kept in contact with the poor solvent C for 10 min. to 20 hrs.

In the method of the invention, the porous polyamide fine powder can be neutralized by bringing into contact with an alkaline alcohol solution prior to the contact with the poor solvent C.

An example of the alkaline alcohol solution is a solution of an alkali metal hydroxide (e.g., potassium hydroxide or sodium hydroxide) in methanol or ethanol. The alkaline concentration of the alkaline alcohol solution is preferably in the range of 0.01 to 1 N, more preferably in the range of 0.05 to 0.5 N.

The neutralization with the alkaline alcohol solution can be performed by dispersing and suspending the porous polyamide fine powder in the alkaline alcohol solution at a temperature in the range of 10 to 40°C.

The porous polyamide fine powder subjected to the purification method of the invention scarcely contains a solvent A which was employed for the production of the polyamide fine powder. Particularly, if the solvent A is a phenol compound, formic acid or sulfuric acid, the content of the remaining solvent can be less than 100 weight ppm, particularly less than 50 weight ppm, more particularly 10 weight ppm.

The porous polyamide fine powder of the invention preferably has a number average particle size in the range of 1 to 30 $\mu$m and a BET specific surface area in the range of 100 to 80,000 m$^2$/kg. More preferably, the number average particle size is in the range of 0.3 to 25 $\mu$m. The BET specific surface area more preferably is in the range of 1,000 to 60,000 m$^2$/kg, most preferably 3,000 to 50,000 m$^2$/kg.

The porous polyamide fine powder of the invention can be favorably utilized as a component for various cosmetics such as cleansing mask, a packing material for chromatographic apparatus, a carrier for various catalysts, or an adsorbent. Further, the porous polyamide fine powder of the invention can be favorably utilized in food industries and medical fields. Furthermore, a coloring material can be deposited on the porous polyamide fine powder of the invention for the use as a toner for electrostatic photography or an element for display devices.

[Examples]

In the following examples and comparison examples, the quantitative analyses of the phenol compound, formic acid and sulfuric acid in the porous polyamide fine powder, the confirmation of particle shape of the polyamide fine powder, and determinations of the particle size, specific surface area and cristallinity were performed by the below-described methods.

(1) Quantitative analyses of phenol compound and formic acid

The phenol compound and formic acid in the porous polyamide fine powder is obtained out in the gas chromatography-mass spectrometer (GC-MS) by a hot extraction method under the below-described conditions. The extract is separated in the gas chromatography and introduced in the mass spectrometer for identification and quantitative analysis. The lowest limit for the detection was 1 weight ppm.

Amount of porous polyamide fine powder sample: 1 mg

Hot extraction: 10 min. at 230°C

Column: INNOWAX or FFAP, temperature elevation of 50 to 260°C

(2) Quantitative analysis of sulfuric acid

5 mg of the porous polyamide fine powder placed on a filter paper is introduced in a platinum basket and subjected to the oxygen flask-firing procedure. The evaporated sulfur oxide is absorbed by an ion chromatographic eluent, and the eluent is introduced into an ion chromatographic column (IonPac or TSK gel) for the determination of a sulfate ion ($SO_4^{-2}$). The lowest limit for the detection was 1 weight ppm.

(3) Confirmation of particle shape and determination of particle size

The confirmation and determination are performed by means of a scanning electron microscope (SEM). The particle sizes of the polyamide particles are measured on the SEM image. The particle size of non-spherical particles is determined from a diameter of a circular image corresponding to a projected particle image.

The number average particle size (Dn) and volume average particle size (Dv) are obtained by calculation according to the following formulas (1) and (2) using 100 particles.

$$Dn = \sum_{i=1}^{n} Xi / n \qquad (1)$$

$$Dv = \sum_{i=1}^{n} Xi^4 / \sum_{i=1}^{n} Xi^3 \qquad (2)$$

Remarks: Xi: particle size of each particle

n: number of particles (100)

Dn: number average particle size

Dv: volume average particle size

(4) Determination of specific surface area

The determination is performed by the BET 3-points measurements utilizing nitrogen gas adsorption

(5) Determination of cristallinity

The polyamide fine powder is placed in a differential thermal analyzer (DSC) and heated from room temperature at a temperature elevation rate of 10°C/min., in a nitrogen stream at a flow rate of 40 mL/min. The heat of fusion of the polyamide fine powder is obtained from the heat absorption peak area in the temperature range of 180 to 235°C. The crystallinity is calculated using the following formula:

$$\text{Crystallinity (\%) = (Heat of fusion Hf)/(Standard heat of fusion)} \times 100$$

[Standard heat of fusion is 189 J/g for polyamide 6 and 209 J/g for polyamide 12]

[Example 1]

(1) 50 g of polyamide 6 (available from UBE INDUSTRIES, LTD., 1013B, number average molecular weight: 13,000) was dissolved in 950 g of m-cresol, to give a m-cresol solution containing 5 wt.% of polyamide 6. The solution was stirred and placed in 6 kg of a mixture of methanol (5 kg) and water (1 kg) under stirring. The stirring was continued until a homogeneous solution was formed and then allowed to stand. As a lapse of a certain period, particles of polyamide 6 precipitated in the solution. The solution was further allowed to stand for 2 hours, the particles of polyamide 6 were collected on filter paper by filtration. The collected particles were washed with three 10,000 mL portions of methanol at 25°C on the filter paper. The washed particles were dried at 60°C for 8 hours using a hot air dryer. Thus dried particles were then placed in a vacuum oven and further dried at 60°C for 8 hours. Observation by means of the scanning electron microscope indicated that the resulting fine powder of polyamide 6 comprised porous spherical particles having almost uniform particle shapes and sizes. The fine powder of polyamide 6 had a number average particle size of 8.6 $\mu$m, a volume average particle size of 9.3 $\mu$m, a specific surface area of 10,600 m$^2$/kg, a heat of fusion (Hf) of 110 J/g, and a crystallinity of 58%.

(2) 1 g of the porous polyamide 6 fine powder obtained in (1) above was placed in a jacketed Soxhlet's extractor and kept under contact with refluxing methanol for 10 hours. The fine powder was then taken out of the extractor, dried at 60°C for 8 hours by a hot air dryer, and further dried in a vacuum oven at 60°C for 8 hours.

The dried porous polyamide 6 fine powder was subjected to the quantitative analyses of the remaining solvents. The analytical data indicated that the m-cresol content was 4 weight ppm, and that neither other phenolic compounds nor formic acid and sulfuric acid were detected (amounts were less than 1 weight ppm of the detection limits).

[Comparison Example 1]

The porous polyamide 6 fine powder obtained in Example 1-(1) was subjected to the quantitative analyses of the remaining solvents. The analytical data indicated that the m-cresol content was 20,000 weight ppm, and that neither formic acid nor sulfuric acid was detected (amounts were less than 1 weight ppm of the detection limits).

[Example 2]

The procedures of Example 1-(2) were carried out by bringing acetone into contact with the porous polyamide 6 fine powder obtained in Example 1-(1), and the polyamide 6 fine powder was dried.

The dried porous polyamide 6 fine powder was subjected to the quantitative analyses of the remaining solvents. The analytical data indicated that the m-cresol content was 2 weight ppm, and that neither other phenolic compounds nor formic acid and sulfuric acid were detected (amounts were less than 1 weight ppm of the detection limits).

[Example 3]

10 g of the porous polyamide 6 fine powder obtained in Example 1-(1) was placed in a solution of potassium hydroxide (0.1 mol/L) in methanol. The methanol solution was stirred for one hour for neutralization. The neutralized polyamide 6 fine powder was taken out of the methanol solution and then dried at 60°C for 8 hours by a hot air dryer. The dried powder was further dried in a vacuum oven at 60°C for 8 hours.

1 g of the neutralized polyamide 6 fine powder was brought into contact with methanol in the same manner as in Example 1-(2), and then dried.

The dried porous polyamide 6 fine powder was subjected to the quantitative analyses of the remaining solvents. The analytical data indicated that none of m-cresol, other phenolic compounds, formic acid and sulfuric acid were detected (amounts were less than 1 weight ppm of the detection limits).

[Example 4]

The procedures of Example 3 were repeated except that the neutralized polyamide 6 fine powder was brought into contact with acetone and then dried.

The dried porous polyamide 6 fine powder was subjected to the quantitative analyses of the remaining solvents. The analytical data indicated that none of m-cresol, other phenolic compounds, formic acid and sulfuric acid were detected (amounts were less than 1 weight ppm of the detection limits).

[Example 5]

The procedures of Example 3 were repeated except that the neutralized polyamide 6 fine powder was brought into contact with toluene and then dried.

The dried porous polyamide 6 fine powder was subjected to the quantitative analyses of the remaining solvents. The analytical data indicated that none of m-cresol, other phenolic compounds, formic acid and sulfuric acid were detected (amounts were less than 1 weight ppm of the detection limits).

[Example 6]

(1) The procedures of Example 1- (1) were repeated except that a mixture of 855 g of phenol and 95 g of methanol was used as a polyamide solvent in place of m-cresol, to give a polyamide 6 fine powder. Observation by means of the scanning electron microscope indicated that the resulting fine powder of polyamide 6 comprised porous spherical particles having almost uniform particle shapes and sizes. The fine powder of polyamide 6 had a number average particle size of 8.4 $\mu$m, a volume average particle size of 9.0 $\mu$m, a specific surface area of 9,800 m$^2$/kg, a heat of fusion (Hf) of 112 J/g, and a crystallinity of 59%.

(2) 1 g of the porous polyamide 6 fine powder obtained in (1) above was brought into contact with methanol and dried in the same manner as in Example 1-(2).

The dried porous polyamide 6 fine powder was subjected to the quantitative analyses of the remaining solvents. The analytical data indicated that the phenol content was 10 weight ppm, and that neither other phenolic compounds nor formic acid and sulfuric acid were detected (amounts were less than 1 weight ppm of the detection limits)

[Comparison Example 2]

The porous polyamide 6 fine powder obtained in Example 6-(1) was subjected to the quantitative analyses of the remaining solvents. The analytical data indicated that the phenol content was 10,000 weight ppm, and that neither other phenolic compounds nor formic acid and sulfuric acid were detected (amounts were less than 1 weight ppm of the detection limits).

[Example 7]

1 g of the porous polyamide 6 fine powder obtained in Example 6- (1) was placed in 20 g of methanol (heated to 50°C) contained in a sealable vessel, stirred for one hour, and then collected by filtration. These contact procedures were repeated five times. Subsequently, the polyamide 6 fine powder was dried at 60°C for 8 hours by a hot air dryer, and further dried in a vacuum oven at 60°C for 8 hours.

The dried porous polyamide 6 fine powder was subjected to the quantitative analyses of the remaining solvents. The analytical data indicated that the phenol content was 50 weight ppm, and that neither other phenolic compounds nor formic acid and sulfuric acid were detected (amounts were less than 1 weight ppm of the detection limits).

[Example 8]

30 g of the porous polyamide 6 fine powder obtained in Example 6-(1) was placed in a filter bag and set in a centrifugal separator. In the separator, the polyamide 6 fine powder was brought into contact with 300 g of methanol (heated to 50°C) under rotation at a rate of 3,000 rpm. These contact procedures were repeated three times. Subsequently, the polyamide 6 fine powder was dried at 60°C for 8 hours by a hot air dryer, and further dried in a vacuum oven at 60°C for 8 hours.

The dried porous polyamide 6 fine powder was subjected to the quantitative analyses of the remaining solvents.

The analytical data indicated that the phenol content was 50 weight ppm, and that neither other phenolic compounds nor formic acid and sulfuric acid were detected (amounts were less than 1 weight ppm of the detection limits) .

[Example 9]

(1) The procedures of Example 1-(1) were repeated except that 900 g of formic acid was used as a polyamide solvent in place of m-cresol, to give a polyamide 6 fine powder. Observation by means of the scanning electron microscope indicated that the resulting fine powder of polyamide 6 comprised porous spherical particles having almost uniform particle shapes and sizes. The fine powder of polyamide 6 had a number average particle size of 10.4 $\mu$m, a volume average particle size of 11.0 $\mu$m, and a specific surface area of 11,000 m$^2$/kg.
(2) 1 g of the porous polyamide 6 fine powder obtained in (1) above was brought into contact with methanol and dried in the same manner as in Example 1-(2).

The dried porous polyamide 6 fine powder was subjected to the quantitative analyses of the remaining solvents. The analytical data indicated that none of formic acid, sulfuric acid and phenolic compounds were detected (amounts were less than 1 weight ppm of the detection limits).

[Comparison Example 3]

The porous polyamide 6 fine powder obtained in Example 9-(1) was subjected to the quantitative analyses of the remaining solvents. The analytical data indicated that the formic acid content was 5,000 weight ppm, and that neither phenolic compounds nor sulfuric acid were detected (amounts were less than 1 weight ppm of the detection limits).

[Example 10]

(1) To 98.0 g of phenol heated to 70°C were added 10.0 g of ethylene glycol, 2.5 g of polyethylene glycol (number average molecular weight: 1,540) and 2.5 g of polypropylene glycol (number average molecular weight: 3,000), and the resulting mixture was well stirred, to give a solvent mixture. The solvent mixture was then placed in a sealable vessel.
In the solvent mixture was placed 2.0 g of polyamide 12 (available from UBE INDUSTRIES, LTD., 3014U, number average molecular weight: 14,000) and the resulting mixture was stirred at 70°C for 24 hours, to give the polyamide 12 was completely dissolved in the solvent mixture. There was obtained a solution having a polyamide 12 concentration of 1.74 wt.%. The polyamide 12 solution was then stored at 30°C.
(2) 14 g of glycerol and 9.5 g of ethylene glycol were mixed to give a non-solvent mixture. The non-solvent mixture was stored at 30°C.
(3) The polyamide 12 solution (kept at 30°C) and the non-solvent mixture (kept at 30°C) were mixed, and stirred for 10 minutes by means of a stirrer (motor rotation: 300 rpm). After the stirring was complete, the mixture was allowed to stand at 30°C. At a lapse of 90 minutes, the mixture solution turned turbid because of precipitation of polyamide 12 particles. Thereafter, the mixture was further allowed to stand at 30°C for 24 hours. The precipitated particles of polyamide 12 were collected on filter paper by filtration. The collected particles were washed with three 1,000 mL portions of methanol at 25°C on the filter paper. The washed particles were dried at 60°C for 12 hours in a vacuum oven. Observation by means of the scanning electron microscope indicated that the resulting fine powder of polyamide 12 comprised porous spherical particles having almost uniform particle shapes and sizes. The fine powder of polyamide 12 had a number average particle size of 15.1 $\mu$m, a volume average particle size of 15.4 $\mu$m, a specific surface area of 5,400 m$^2$/kg, a heat of fusion (Hf) of 145 J/g, and a crystallinity of 69%.
(4) 0.5 g of the porous polyamide 12 fine powder obtained in (3) above was placed in a jacketed Soxhlet's extractor and kept under contact with refluxing methanol for 10 hours. The fine powder was then taken out of the extractor and dried at 60°C for 8 hours by a hot air dryer.

The dried porous polyamide 12 fine powder was subjected to the quantitative analyses of the remaining solvents. The analytical data indicated that the phenol content was 3 weight ppm, and that neither other phenolic compounds nor formic acid and sulfuric acid were detected (amounts were less than 1 weight ppm of the detection limits) .

[Comparison Example 4]

The porous polyamide 12 fine powder obtained in Example 10-(3) was subjected to the quantitative analyses of the remaining solvents. The analytical data indicated that the phenol content was 6,000 weight ppm, and that neither other phenolic compounds nor formic acid and sulfuric acid were detected (amounts were less than 1 weight ppm of the detection limits).

**Claims**

1. A method for purifying a porous polyamide fine powder having been prepared by bringing a non-solvent B for the polyamide into contact with a polyamide solution in which a polyamide is dissolved in a solvent A and containing a remaining solvent A is treated with a poor solvent C which is compatible with the solvent A at least at a temperature of 40°C or higher at a temperature of 40°C or higher, whereby the solvent A is extracted out of the porous polyamide fine powder.

2. The method of claim 1, in which the solvent A is a compound selected from the group consisting of phenolic compounds, formic acid and sulfuric acid.

3. The method of claim 1, in which the non-solvent B is a compound selected from the group consisting of water and organic solvents in which the polyamide is sparingly soluble.

4. The method of claim 1, in which the poor solvent C is a compound selected from the group consisting of aliphatic alcohols, aliphatic or aromatic ketones, aliphatic or aromatic hydrocarbons, and water.

5. The method of claim 1, in which the polyamide is polyamide 6 and the non-solvent B comprises water and an organic solvent in which the polyamide is sparingly soluble.

6. The method of claim 1, in which the polyamide is polyamide 12 and the non-solvent B comprises alkylene glycol and an organic solvent other than the alkylene glycol in which the polyamide is sparingly soluble.

7. The method of claim 1, in which the solvent A is a phenolic compound and the poor solvent C is an aliphatic alcohol, an aliphatic ketone, an aromatic ketone, or an aromatic hydrocarbon.

8. The method of claim 1, in which the solvent A is formic acid or sulfuric acid and the poor solvent C is an aliphatic alcohol, an aliphatic ketone, or water.

9. The method of claim 1, in which the porous polyamide fine powder is brought into contact with an alkaline alcohol solution in advance the powder is brought into contact with the poor solvent C.

10. The method of claim 1, in which the porous polyamide fine powder has a number average particle size in the range of 1 to 30 $\mu$m and a BET specific surface area in the range of 100 to 80,000 m$^2$/kg.

11. A porous polyamide fine powder purified by the method of claim 1.

12. A porous polyamide fine powder which does not contain 100 weight ppm or more of phenol compounds, formic acid, and sulfuric acid.

13. The porous polyamide fine powder of claim 12, which has a number average particle size in the range of 1 to 30 $\mu$m and a BET specific surface area in the range of 100 to 80,000 m$^2$/kg.

<table>
<tr><td colspan="2" style="text-align:center"><b>INTERNATIONAL SEARCH REPORT</b></td><td>International application No.<br>PCT/JP2005/007347</td></tr>
</table>

| A. CLASSIFICATION OF SUBJECT MATTER |
|---|
| Int.Cl$^7$  C08J3/14//C08L77:00 |
| According to International Patent Classification (IPC) or to both national classification and IPC |

| B. FIELDS SEARCHED |
|---|
| Minimum documentation searched (classification system followed by classification symbols)<br>   Int.Cl$^7$  C08J3/14, C08J9/28 |
| Documentation searched other than minimum documentation to the extent that such documents are included in the fields searched<br>   Jitsuyo Shinan Koho          1922-1996   Jitsuyo Shinan Toroku Koho   1996-2005<br>   Kokai Jitsuyo Shinan Koho    1971-2005   Toroku Jitsuyo Shinan Koho   1994-2005 |
| Electronic data base consulted during the international search (name of data base and, where practicable, search terms used) |

| C. DOCUMENTS CONSIDERED TO BE RELEVANT | | |
|---|---|---|
| Category* | Citation of document, with indication, where appropriate, of the relevant passages | Relevant to claim No. |
| X<br>A | JP 2002-80629 A  (Ube Industries, Ltd.),<br>19 March, 2002 (19.03.02),<br>Claims 1, 8; Par. No. [0053]<br>(Family: none) | 11-13<br>1-10 |
| A | JP 2005-54153 A  (Ube Industries, Ltd.),<br>03 March, 2005 (03.03.05),<br>Claims 1 to 8<br>(Family: none) | 1-13 |

|  ☐  Further documents are listed in the continuation of Box C. |  ☐  See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>   26 April, 2005 (26.04.05) | Date of mailing of the international search report<br>   24 May, 2005 (24.05.05) |
|---|---|
| Name and mailing address of the ISA/<br>   Japanese Patent Office | Authorized officer |
| Facsimile No. | Telephone No. |

Form PCT/ISA/210 (second sheet) (January 2004)

**EP 1 908 793 A1**

**REFERENCES CITED IN THE DESCRIPTION**

**Patent documents cited in the description**

- JP 2002080629 A